# EUROPEAN PATENT SPECIFICATION

(11) **EP 1 199 935 B1**
(45) Date of publication and mention of the grant of the patent: **22.09.2004**
(21) Application number: 00943212.1
(22) Date of filing: 28.06.2000
(51) Int. Cl.: A01N 65/00, A01N 25/00

(54) **PESTICIDAL COMPOSITIONS CONTAINING ROSEMARY OIL**
PESTIZIDE ZUSAMMENSETZUNGEN MIT ROSMARINÖL
COMPOSITIONS ANTIPARASITAIRES CONTENANT DE L'ESSENCE DE ROMARIN

(30) Priority: 28.06.1999 US 140845 P
(43) Date of publication of application: 02.05.2002
(73) Proprietor: Ecosmart Technologies, Inc., Franklin, TN 37067 (US)
(72) Inventor: BESSETTE, Steven, M., Brentwood, TN 37027 (US); ENAN, Essam, E., Franklin, TN 37067 (US)
(74) Representative: Schneider, Michael, Dr.
(86) International application number: PCT/US2000/017676
(87) International publication number: WO 2001/000032

(56) References cited:
- WO-A-98/30124
- US-A- 4 759 930
- NGOH, SHAY P. ET AL: "Insecticidal and repellent properties of nine volatile constituents of essential oils against the American cockroach, Periplaneta americana (L.)" PESTIC. SCI. (1998), 54(3), 261-268, XP000804294 Singapore
- HORI, M: "Repellency of Rosemary oil against Myzus persicae in a Laboratory and in the Screenhouse" J. CHEMICAL ECOLOGY, vol. 24, no. 9, - 1998 pages 1425-1433, XP000941299 Japan
- DATABASE WPI Derwent Publications Ltd., London, GB; AN 1992-411544 XP002150802 "Insecticidal Composition Contains Plant Oil and/or Terpene Oil to Improve Insecticidal Effect" & JP 04 308510 A (EARTH SEIYAKU KK), 30 October 1992 (1992-10-30)
- KING, W.V.: "Chemicals Evaluated as Insecticides and Repellents at Orlando, Fla." AGRIC. HANDBOOK, - 1954 page 1-17 XP002921424 USA
- RÖMPPS CHEMIE LEXIKON: " Rosmarinöl" 1992 , GEORG-THIEME-VERLAG , STUTTGART, GERMANY XP002150801 * the whole document *

## Description

This application claims the benefit of U. S. Provisional Application Serial No. 60/140,845, filed June 28,1999.

### FIELD OF THE INVENTION

The present invention relates, in general, to pesticidal compositions containing rosemary oil against household pests, including cockroaches and ants. In one aspect, the present invention relates to pesticidal compositions comprising rosemary oil, optionally blended with one or more plant essential oils compounds and/or derivatives thereof, to be used as a contact pesticide against household pests. In another aspect, the present invention relates to the use of new technology to achieve synergistic pesticidal activity between or among rosemary oil and at least one member selected from the group consisting of eugenol, phenethyl propionate, and benzyl alcool. The present invention also relates to synergistic compositions comprising rosemary oil in combination with metabolic detoxification inhibitors, piperonyl butoxide (PBO), sesame oil and signal transduction modulators, such as tyrosine kinase family member inhibitors, (e. g. genistein). The present invention further relates to the necessary pesticidally effective ratios between and among the constituents of each of the above inventive blends and the proper delivery system for same.

In a further aspect, the present invention relates to a method for controlling household pests, including cockroaches and ants, by the application of pesticidally effective amounts of the pesticidal compositions to a location where pest control is desired.

### BACKGROUND OF THE INVENTION

Pests (invertebrates, insects, arachnids, larvae thereof, etc.) are annoying to humans for a myriad of reasons. They have annually cost humans billions of dollars in crop losses and in the expense of keeping them under control. For example, the losses caused by pests in agricultural environments include decreased crop yield, reduced crop quality, and increased harvesting costs. In household scenarios, insect pests may act as vectors for diseases and allergic matter.

Over the years, synthetic chemical pesticides have provided an effective means of pest control. For example, one approach teaches the use of complex, organic insecticides, such as disclosed in U. S. Pat. Nos. 4,376,784 and 4,308,279. Other approaches employ absorbent organic polymers for widespread dehydration of the insects. See, U. S. Pat. Nos. 4,985,251; 4,983,390; 4,818,534; and 4,983,389. Use of inorganic salts as components of pesticides has also been tried, as disclosed in U. S. Pat. Nos. 2,423,284 and 4,948,013, European Patent Application No. 462 347, Chemical Abstracts 119 (5): 43357q (1993) and Farm Chemicals Handbook, page c102 (1987).

However, it has become increasingly apparent that the widespread use of synthetic chemical pesticides has caused detrimental environmental effects that are harmful.to humans and other animals. For instance, the public has become concerned about the amount of residual chemicals that persist in food, ground water and the environment, and that are toxic, carcinogenic or otherwise incompatible to humans, domestic animals and/or fish. Moreover, some target pests have even shown an ability to develop resistance to many commonly used synthetic chemical pesticides. In recent times, regulatory guidelines have encouraged a search for potentially less dangerous pesticidal compositions via stringent restrictions on the use of certain synthetic pesticides. As a result, elimination of effective pesticides from the market has limited economical and effective options for controlling pests.

As an alternative, botanical pesticides are of great interest because they are natural pesticides, i. e., toxicants derived from plants that are safe to humans and the environment.

Accordingly, there is a great need for novel pesticidal compositions, containing no pyrethrum, synthetic pyrethroids, chlorinated hydrocarbons, organo phosphates, carbamates and the like, to be used against household pests, including cockroaches and ants. In addition, there is a need for a method of treating the household to kill insect pests.

Pesticidal compositions of pyrethrum with plant oils have been disclosed in US Patent Nos. 4759,930, however, no pesticidal activity was attributed to the rosemary oil when used in isolation. The compositions disclosed also have the disadvantage of taking several days in order to kill the household pests. It would be more desirable to have a composition with pesticidal activity effective in a matter of hours.

Plant oils have also been shown to have repellency activity against parasitic insects (Patent No. WO 98/30124) and aphids (Hori (1988) J Chemical Ecology vol 24, 1425-1432). Repellency activity is undesirable when devising an insecticidal composition since insecticidal activity requires contact between the pest and the composition.

### SUMMARY OF THE INVENTION

A primary object of the present invention is to provide novel pesticidal compositions for use against household pests, including cockroaches and ants.

Another object of the invention is to provide novel pesticidal compositions containing rosemary oil with and without one or more plant essential oils and/or derivatives thereof, natural or synthetic, as a contact pesticide in the household.

It is also an object of the present invention to provide a method of treating a locus where pest control is desired.

It is also an object of the present invention to provide a pesticidal composition and method for mechanically and neurally controlling household pests.

It is a further object to provide a safe, non-toxic pesticidal composition and method that will not harm mammals or the environment.

It is still another object to provide a pesticidal composition and method that has a pleasant scent or is unscented, and that can be applied without burdensome safety precautions.

It is still another object to provide a pesticidal composition and method as described above which can be inexpensively produced or employed.

It is yet another object of the invention to provide a pesticidal composition and method to which pests can not build resistance.

The above and other objects are accomplished by the present invention which is directed to pesticidal compositions comprising rosemary oil, optionally blended with natural or synthetic plant essential oil compounds and/or derivatives thereof, in admixture with suitable carriers. In addition, the present invention is directed to a method for controlling household pests by applying a pesticidally-effective amount of the above pesticidal compositions to a location where pest control is desired.

Additional objects and attendant advantages of the present invention will be set forth, in part, in the description that follows, or may be leamed from practicing or using the present invention. The objects and advantages may be realized and attained by means of the instrumentalities and combinations particularly recited in the appended claims. It is to be understood that the foregoing general description and the following detailed description are exemplary and explanatory only and are not to be viewed as being restrictive of the invention, as claimed.

### DETAILED DESCRIPTION OF PREFERRED EMBODIMENTS

In one embodiment, the present invention provides a pesticidal composition comprising rosemary oil, in admixture with a suitable carrier, optionally with a suitable surface active agent, and optionally with one or more natural or synthetic plant essential oil compounds and/or derivatives thereof, including racemic mixtures, enantiomers, diastereomers, hydrates, salts, solvates and metabolites, etc. As used herein, the term "plant essential oil" or "plant essential oil compound" (which shall include derivatives thereof) generally refers to a monocyclic, carbocyclic ring structure having six-members and substituted by at least one oxygenated or hydroxyl functional moiety. Examples of plant essential oils encompassed within the present invention, include, but are not limited to, members selected from the group consisting of aldehyde C16 (pure), α-terpineol, amyl cinnamic aldehyde, amyl salicylate, anisic aldehyde, benzyl alcohol, benzyl acetate, cinnamaldehyde, cinnamic alcohol, carvacrol, carveol, citral, citronellal, citronellol, p-cymene, diethyl phthalate, dimethyl salicylate, dipropylene glycol, eucalyptol (cineole), eugenol, iso-eugenol, galaxolide, geraniol, guaiacol, ionone, menthol, menthyl salicylate, methyl anthranilate, methyl ionone, methyl salicylate, α-phellandrene, pennyroyal oil, perillaldehyde, 1- or 2-phenyl ethyl alcohol, 1- or 2-phenyl ethyl propionate, piperonal, piperonyl acetate, piperonyl alcohol, D-pulegone, terpinen-4-ol, terpinyl acetate, 4-tert butylcyclohexyl acetate, thyme oil, thymol, metabolites of trans-anethole, vanillin, ethyl vanillin, and the like. As these plant essential oil compounds are known and used for other non-pesticidal uses, they may be prepared by a skilled artisan by employing known methods or obtained from commercially available sources.

It will be appreciated by the skilled artisan that the pesticidal compositions of the present invention unexpectedly exhibit excellent pesticidal activities using one or more U.S. F.D.A. approved plant essential oils, in lieu of conventional pesticides which are not safe for use in households and other sensitive areas. Without wishing to be bound by the following theories, it is believed that plant essential oils attack a pest's nervous system or may act as Phase I and/or Phase Il drug metabolizing enzyme inhibitors. Altematively, the plant essential oils may act via an alternative mode of action. The piant essential oiis may even act as agonists or antagonists against the octopamine/octopamine receptors system that are distinct to invertebrates. In any event, the net effect of the toxicity and action of the inventive composition disclosed herein is heretofore unknown and unexpectedly superior.

Use of pesticidal compositions of the present invention generally results in fast knockdown and 100% mortality on contact. As such, they are advantageously employed as pesticidal agents in uses such as, without limitation, households, agriculture, organic farming, professional pest control, pet bedding, foliage application, underwater or submerged application, solid treatment, soil incorporation application, seedling box treatment, stalk injection and planting treatment, omamentals, termites, mosquitoes, fire ants, dust mites, etc.

With respect to soil, the pesticidal compositions resist weathering which includes wash-off caused by rain, decomposition by ultra-violet light, oxidation, or hydrolysis in the presence of moisture or, at least such decomposition, oxidation and hydrolysis as would materially decrease the desirable pesticidal characteristic of the pesticidal compositions or impart undesirable characteristics to the pesticidal compositions. The pesticidal compositions are so chemically inert that they are compatible with substantially any other constituents of pest control, and they may be used in the soil, upon the seeds, or the roots of plants without injuring either the seeds or roots of plants. They may also be used in combination with other pesticidally active compounds.

The term "carrier" as used herein means an inert or fluid material, which may be inorganic or organic and of synthetic or natural origin, with which the active compound is mixed or formulated to facilitate its application to the container or carton or other object to be treated, or its storage, transport and/or handling. In general, any of the materials customarily employed in formulating pesticides, herbicides, or fungicides, are suitable. The inventive pesticidal compositions of the present invention may be employed alone or in the form of mixtures with such solid and/or liquid dispersible carrier vehicles and/or other known compatible active agents such as other pesticides, or acaricides, nematicides, fungicides, bactericides, rodenticides, herbicides, fertilizers, growth-regulating agents, etc., if desired, or in the form of particular dosage preparations for specific application made therefrom, such as solutions, emulsions, suspensions, powders, pastes, and granules which are thus ready for use. The pesticidal compositions of the present invention can be formulated or mixed with, if desired, conventional inert pesticide diluents or extenders of the type usable in conventional pesticide formulations or compositions, e.g. conventional pesticide dispersible carrier vehicles such as gases, solutions, emulsions, suspensions, emulsifiable concentrates, spray powders, pastes, soluble powders, dusting agents, granules, foams, pastes, tablets, aerosols, natural and synthetic materials impregnated with active compounds, microcapsules, coating compositions for use on seeds, and formulations used with burning equipment, such as fumigating cartridges, fumigating cans and fumigating coils, as well as ULV cold mist and warm mist formulations, etc.

Formulations containing the pesticidal compositions of the present invention may be prepared in any known manner, for instance by extending the pesticidal compositions with conventional pesticide dispersible liquid diluent carriers and/or dispersible solid carriers optionally with the use of carrier vehicle assistants, e.g. conventional pesticide surface-active agents, including emulsifying agents and/or dispersing agents, whereby, for example, in the case where water is used as diluent, organic solvents may be added as auxiliary solvents. Suitable liquid diluents or carriers include water, petroleum distillates, or other liquid carriers with or without surface active agents. The choice of dispersing and emulsifying agents and the amount employed is dictated by the nature of the composition and the ability of the agent to facilitate the dispersion of the pesticidal compositions of the present invention. Non-ionic, anionic, amphoteric, or cationic dispersing and emulsifying agents may be employed, for example, the condensation products of alkylene oxides with phenol and organic acids, alkyl aryl sulfonates, complex ether alcohols, quaternary ammonium compounds, and the like.

Liquid concentrates may be prepared by dissolving a composition of the present invention with a solvent and dispersing the pesticidal compositions of the present inventions in water with the acid of suitable surface active emulsifying and dispersing agents. Examples of conventional carrier vehicles for this purpose include, but are not limited to, aerosol propellants which are gaseous at normal temperatures and pressures, such as Freon; inert dispersible liquid diluent carriers, including inert organic solvents, such as aromatic hydrocarbons (e.g. benzene, toluene, xylene, alkyl naphthalenes, etc.), halogenated especially chlorinated, aromatic hydrocarbons (e.g. chloro-benzenes, etc.), cycloalkanes, (e.g. cyclohexane, etc.). paraffins (e.g. petroleum or mineral oil fractions), chlorinated aliphatic hydrocarbons (e.g. methylene chloride, chloroethylenes, etc.), alcohols (e.g. methanol, ethanol, propanol, butanol, glycol, etc.) as well as ethers and esters thereof (e.g. glycol monomethyl ether, etc.), amines (e.g. ethanolamine, etc.), amides (e.g. dimethyl formamide etc.) sulfoxides (e.g. dimethyl sulfoxide, etc.), acetonitrile, ketones (e.g. acetone, methyl ethyl ketone, methyl isobutyl ketone, cyclohexanone, etc.), and/or water; as well as inert dispersible finely divided solid carriers such as ground natural minerals (e.g. kaolins, clays, vermiculite, alumina, silica, chalk, i.e. calcium carbonate, talc, attapulgite, montmorillonite, kieselguhr, etc.) and ground synthetic minerals (e.g. highly dispersed silicic acid, silicates, e.g. alkali silicates, etc.).

Surface-active agents, i.e., conventional carrier vehicle assistants, that may be employed with the present invention include, without limitation, emulsifying agents, such as non-ionic and/or anionic emulsifying agents (e.g. polyethylene oxide esters of fatty acids, polyethylene oxide ethers of fatty alcohols, alkyl sulfates, alkyl sulfonates, aryl sulfonates, albumin hydrolyzates, etc. and especially alkyl arylpolyglycol ethers, magnesium stearate, sodium oleate, etc.); and/or dispersing agents such as lignin, sulfite waste liquors, methyl cellulose, etc.

In the preparation of wettable powders, dust or granulated formulations, the active ingredient is dispersed in and on an appropriately divided carrier. In the formulation of the wettable powders the aforementioned dispersing agents as well as lignosulfonates can be included. Dusts are admixtures of the compositions with finely divided solids such as talc, attapulgite clay, kieselguhr, pyrophyllite, chalk, diatomaceous earth, vermiculite, calcium phosphates, calcium and magnesium carbonates, sulfur, flours, and other organic and inorganic solids which acts carriers for the pesticide. These finely divided solids preferably have an average particle size of less than about 50 microns. A typical dust formulation useful for controlling insects contains 1 part of pesticidal composition and 99 parts of diatomaceous earth or vermiculite. Granules may comprise porous or nonporous particles. The granule particles are relatively large, a diameter of about 400-2500 microns typically. The particles are either impregnated or coated with the inventive pesticidal compositions from solution. Granules generally contain 0.05-15%, preferably 0.5-5%, active ingredient as the pesticidally-effective amount. Thus, the contemplated are formulations with solid carriers or diluents such as bentonite; fullers earth, ground natural minerals, such as kaolins, clays, talc, chalk, quartz, attapulgite, montmorillonite or diatomaceous earth, vermiculite, and ground synthetic minerals, such as highly-dispersed silicic acid, alumina and silicates, crushed and fractionated natural rocks such as calcite, marble, pumice, sepiolite and dolomite, as well as synthetic granules of inorganic and organic meals, and granules of organic materials such as sawdust, coconut shells, com cobs and tobacco stalks. Adhesives, such as carboxymethyl cellulose, natural and synthetic polymers, (such as gum arabic, polyvinyl alcohol and polyvinyl acetate), and the like, may also be used in the formulations in the form of powders, granules or emulsifiable concentrations.

If desired, colorants such as inorganic pigments, for example, iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc may be used.

In commercial applications, the present invention encompasses carrier composition mixtures in which the pesticidal compositions are present in an amount substantially between about 0.01-95% by weight, and preferably 0.5-90% by weight, of the mixture, whereas carrier composition mixtures suitable for direct application or field application generally contemplate those in which the active compound is present in an amount substantially between about 0.0001-10%, preferably 0.01-1%, by weight of the mixture. Thus, the present invention contemplates over-all formulations that comprise mixtures of a conventional dispersible carrier vehicle such as (1) a dispersible inert finely divided carrier solid, and/or (2) a dispersible carrier liquid such as an inert organic solvent and/or water, preferably including a surface-active effective amount of a carrier vehicle assistant, e.g. a surface-active agent, such as an emulsifying agent and/or a dispersing agent, and an amount of the active compound which is effective for the purpose in question and which is generally between about 0.0001-95%, and preferably 0.01-95%, by weight of the mixture.

The pesticidal compositions can also be used in accordance with so-called ultra-low-volume process, i.e. by applying such compounds or by applying a liquid composition containing the same, via very effective atomizing equipment, in finely divided form, e.g. average particle diameter of from 50-100 microns, or even less, i.e. mist form, for example by airplane crop spraying techniques. In this process it is possible to use highly concentrated liquid compositions with said liquid carrier vehicles containing from about 20 to 95% by weight of the pesticidal compositions or even the 100% active substances alone, e.g. about 20-100% by weight of the pesticidal compositions. The concentration in the liquid concentrate will usually vary from about 10 to 95 percent by weight and in the solid formulations from about 0.5 to 90 percent by weight.

Furthermore, the present invention encompasses methods for killing, combating or controlling pests, which comprises applying to at least one of correspondingly (a) such pests and (b) the corresponding habitat thereof, i.e. the locus to be protected, e.g. to the household, a correspondingly combative, a pesticidally effective amount, or toxic amount of the particular pesticidal compositions of the invention alone or together with a carrier as noted above. The instant formulations or compositions may be applied in any suitable usual manner, for instance by spraying, atomizing, vaporizing, scattering, dusting, watering, squirting, sprinkling, pouring, fumigating, and the like. The method for controlling household pests such as cockroaches and ants comprises applying the inventive composition, ordinarily in a formulation of one of the aforementioned types, to a locus or area to be protected from the cockroaches and/or ants, such as the household. The compound, of course, is applied in an amount sufficient to effect the desired action. This dosage is dependent upon many factors, including the targeted pest, the carrier employed, the method and conditions of the application, whether the formulation is present at the locus in the form of an aerosol, or as a film, or as discrete particles, the thickness of film or size of particles, and the like. Proper consideration and resolution of these factors to provide the necessary dosage of the active compound at the locus to be protected are within the skill of those versed in the art. In general, however, the effective dosage of the compound of this invention at the locus to be protected-i.e., the dosage with which the pest comes in contact-is of the order of 0.001 to 5.0% based on the total weight of the formulation, though under some circumstances the effective concentration will be as little as 0.0001 % or as much as 20%, on the same basis.

The pesticidal compositions and methods of the present invention are effective against different species of household pests and it will be understood that the insects exemplified and evaluated in the working Examples herein is representative of such a wider variety.

The composition and method of the present invention will be further illustrated in the following, non-limiting Example. The Example is illustrative of various preferred embodiments only and does not limit the claimed invention regarding the materials, conditions, weight ratios, process parameters and the like recited herein.

### EXAMPLE

### Pesticidal Effects of Plant Essential Oils against the American and German Cockroach

### STUDY A

**Actives:** Rosemary Oil (RM); Peppermint Oil (PMO), Phenethyl Propionate (PEP), and Eugenol.
**Synergist:** Piperonyl Butoxide (PBO)
**Testing model:** American cockroaches
**Method of testing:** walk-across
**Exposure time:** continuous exposure
**Knockdown =** KD
**Mortality = M**

**Test blends:** Rosemary oil was tested alone and in combination with one or more of PMO, PEP or eugenol. In addition, all test actives were tested with and without PBO, a known synergist.

| **Testing:** the following mixtures were tested against American cockroaches: | | | | | |
|---|---|---|---|---|---|
| **EN1** | RM | 125 mg/jar | **EN2** | PMO | 125 mg/jar |
| | | | | | |
| **EN3** | RM | 62.5 mg/jar | **EN4** | PMO | 62.5 mg/jar |
| | PBO | 125.0 mg/jar | | PBO | 125.0 mg/jar |
| | | | | | |
| **EN5** | RM | 62.50 mg/jar | **EN6** | RM | 31.25 mg/jar |
| | PMO | 125.00 mg/jar | | PMO | 31.25 mg/jar |
| | | | | PBO | 125.00 mg/jar |
| **EN7** | RM | 62.5 mg/jar | **EN8** | RM | 62.5 mg/jar |
| | PMO | 62.5 mg/jar | | PMO | 62.5 mg/jar |
| | Eugenol | 12.5 mg/jar | | Eugenol | 12.5 mg/jar |
| | PEP | 25.0 mg/jar | | PEP | 25.0 mg/jar |
| | | | | PBO | 125.0 mg/jar |

| **STUDY A RESULTS** | | | |
|---|---|---|---|
| Test blend | Number of insects | KD/M | Time |
| EN1 | 3 | 1/0 | 3 min |
| | | 2/0 | 8 min |
| | | 3/3 | 3 hr |
| | | | |
| EN2 | 3 | 1/0 | 35 min |
| | | 1/1 | 24 hr |
| | | | |
| EN3 | 3 | 1/0 | 40 min |
| | | 2/0 | 80 min |
| | | 3/3 | 4 hr |
| | | | |
| EN4 | 3 | 1/0 | 52 min |
| | | 3/3 | 4 hr |
| | | | |
| EN5 | 3 | 3/0 | 17 min |
| | | 3/1 | 2 hr |
| | | 2/2 | 4 hr |
| | | | |
| EN6 | 3 | 1/0 | 45 min |
| | | 1/1 | 2 hr |
| | | 2/2 | 24 hr |
| | | | |
| EN7 | 3 | 1/0 | 6 min |
| | | 1/0 | 8 min |
| | | 1/0 | 10 min |
| | | 3/3 | 60-90 min |
| | | | |
| EN8 | 3 | 3/0 | 80 min |
| | | 3/3 | 6 hr |

The above data show that RM induced immediate excitation among treated American cockroaches regardless of the test dose, and RM provides good contact kill against cockroaches, but is dose dependent. PBO, however, delayed the excitation activity when it was mixed with RM (i.e. antagonistic action). PMO did not induce any signs of excitation prior to 10 - 15 min after exposure. Finally, a synergy was observed between Eugenol/PEP and RM/PMO when they were mixed together

### STUDY B

Based on the data from Study A, modified rosemary blends were tested with and without iso-valeric acid (IVA) against American cockroaches

| **Test mixtures:** | | |
|---|---|---|
| EN I | | |
| | RM | 62.50 mg/jar |
| | PMO | 62.50 mg/jar |
| | eugenol | 12.50 mg/jar |
| | PEP | 31.25 mg/jar |
| | | |

| EN II | | |
|---|---|---|
| | RM | 62.50 mg/jar |
| | PMO | 62.50 mg/jar |
| | eugenol | 12.50 mg/jar |
| | PEP | 31.25 mg/jar |
| | IVA | 25.00 mg/jar |
| | | |

| EN III | | |
|---|---|---|
| | RM | 62.50 mg/jar |
| | PMO | 62.50 mg/jar |
| | eugenol | 31.25 mg/jar |
| | PEP | 12.50 mg/jar |
| | | |

| EN IV | | |
|---|---|---|
| | RM | 62.50 mg/jar |
| | PMO | 62.50 mg/jar |
| | eugenol | 31.25 mg/jar |
| | PEP | 12.50 mg/jar |
| | IVA | 25.00 mg/jar |

| | **STUDY B RESULTS** | | |
|---|---|---|---|
| **Test blend** | **number of insects** | **KD/M** | **time** |
| EN I | 3 | 1/0 | 7 min |
| | | 1/0 | 10 min |
| | | 1/0 | 14 min |
| | | 3/3 | 150 min |
| | | | |
| EN II | 3 | 2/0 | 18 min |
| | | 1/0 | 20 min |
| | | 3/3 | 150 min |
| | | | |
| EN III | 3 | 1/0 | 7 min |
| | | 2/0 | 17 min |
| | | 3/3 | 60 min |
| | | | |
| EN IV | 3 | 1/0 | 8 min |
| | | 2/0 | 15 min |
| | | 3/3 | 60 min |

The above data show that higher concentrations of RM and PMO increase their efficacy against American cockroaches as judged by the speed of KD and M. IVA at this concentration did not demonstrate any synergy with the test blends. The ratio between eugenol and PEP is the important factor with this mixture. It is recommended to use eugenol : PEP at 2.5 parts of eugenol and 1 part of PEP. The speed of KD and M, however, is not satisfied under these test conditions

### STUDY C

To study the impact of solvent/delivery system on the efficacy of RM/PMO mixture, Isopar M was used in parallel with acetone.

| **Test mixtures:** | | | |
|---|---|---|---|
| **EN V** | | **EN VI** | |
| RM | 100.00 mg/jar | RM | 100.00 mg/jar |
| PMO | 50.00 mg/jar | PMO | 50.00 mg/jar |
| eugenol | 12.50 mg/jar | eugenol | 12.25 mg/jar |
| PEP In acetone | 31.25 mg/jar | PEP Isopar M | 31.25 mg/jar 125.00 mg/jar |

| **STUDY C RESULTS** | | | |
|---|---|---|---|
| **Test blend** | **number of insects** | **KD/M** | **time** |
| EN V | 3 | 1/0 | 9 min |
| | | 1/0 | 11 min |
| | | 1/0 | 12 min |
| | | 3/1 | 60 min |
| | | 2/1 | 90 min |
| | | 1/1 | 120 min |
| | | | |
| **EN VI** | 3 | 1/0 | 8 min |
| | | 2/0 | 10 min |
| | | 3/1 | 11 min |
| | | 2/2 | 30 min |

The above data show that Isopar M substantially increases the efficacy of RM/PMO mixture

### STUDY D

To study the impact of methyl salicylate vs. menthyl salicylate on the efficacy of RM/PMO mixture. Data from this study will be compared with the data from Study C (above).

| **Test mixtures:** | | | |
|---|---|---|---|
| **EN VII** | | **EN VIII** | |
| RM | 100.00 mg/jar | RM | 100.00 mg/jar |
| PMO | 25.00 mg/jar | PMO | 25.00 mg/jar |
| eugenol | 12.50 mg/jar | eugenol | 12.50 mg/jar |
| PEP | 31.25 mg/jar | PEP | 31.25 mg/jar |
| Methyl salicylate In acetone | 50.00 mg/jar | Menthyl salicylate In acetone | 50.00 mg/jar |

| **STUDY D RESULTS** | | | |
|---|---|---|---|
| **Test blend** | **number of insects** | **KD/M** | **time** |
| **EN VII** | 3 | 1/0 | 4 min |
| | | 1/0 | 7 min |
| | | 1/0 | 9 min |
| | | 3/1 | 45 min |
| | | 2/2 | 70 min |
| | | | |
| **EN VIII** | 3 | 3/0 | 10 min |
| | | 3/3 | 120 min |

The above data shows that both methyl salicylate and menthyl salicylate induced KD within a window of time that is similar to the Isopar M depending on the end point, i.e. KD vs. M.

### STUDY E

The following blends were prepared on 4-4-00, and their efficacy were tested against American cockroaches (BA = benzyl alcohol)
The test blends are:

| Concentration. mg/jar | | | | | | |
|---|---|---|---|---|---|---|
| | **ENu** | **ENv** | **ENw** | **ENx** | **ENy** | **ENz** |
| RM | 100 | 100 | 100 | 0 | 100 | 100 |
| PMO | 50 | 50 | 0 | 50 | 50 | 50 |
| menthyl salicylate | 100 | 0 | 0 | 0 | 0 | 0 |
| soybean oil | 200 | 200 | 200 | 200 | 0 | 200 |
| L-menthyl iso valerate | 0 | 0 | 0 | 0 | 100 | 100 |

| Concentration, mg/jar | | | | | | | |
|---|---|---|---|---|---|---|---|
| | **ENa'** | **ENb'** | **ENc'** | **ENd'** | **ENe'** | **ENf** | **ENg'** |
| **RM** | 100 | 0 | 100 | 100 | 100 | 100 | 0 |
| PMO | 50 | 0 | 50 | 50 | 0 | 50 | 0 |
| BA | 100 | 0 | 0 | 0 | 0 | 100 | 0 |
| menthyl salicylate | 0 | 100 | 0 | 0 | 0 | 0 | 200 |
| soybean oil | 200 | 200 | 200 | 0 | 200 | 0 | 100 |
| Pyrethrum | 0 | 1 | 0 | 0 | 0 | 0 | 3 |
| Sesame oil | 0 | 0 | 300 | 300 | 300 | 0 | 0 |

Three (3) American cockroaches were used per test blend and the walk-across method was used as mode of application. Continuous exposure was performed and KD/M were recorded

| **RESULTS** | | | |
|---|---|---|---|
| **Test blend** | **number of insects** | **KD/M** | **time** |
| ENu | 3 | 1/0 | 6 min |
| | | 2/0 | 18 min |
| | | 3/1 | 29 min |
| | | 2/2 | 3 hr |
| | | | |
| ENv | 3 | 1/0 | 7 min |
| | | 1/0 | 13 min |
| | | 1/0 | 15 min |
| | | 3/1 | 20 min |
| | | 2/2 | 50 min |
| | | | |
| ENw | 3 | 1/0 | 10 min |
| | | 2/0 | 30 min |
| | | 3/1 | 40 min |
| | | 2/2 | 3 hr |
| | | | |
| ENx | 3 | 1/0 | 36 min |
| | | 2/0 | 40 min |
| | | 3/2 | 90 min |
| | | 1/1 | 3 hr |
| | | | |
| ENy | 3 | 1/0 | 2 min |
| | | 2/0 | 5 min |
| | | 3/3 | 60 min |
| | | | |
| ENz | 3 | 1/0 | 2 min |
| | | 2/0 | 12 min |
| | | 3/1 | 22 min |
| | | 2/2 | 40 min |
| | | | |
| ENa' | 3 | 1/0 | 2 min |
| | | 1/0 | 7 min |
| | | 3/1 | 9 min |
| | | 2/2 | 19 min |
| | | | |
| ENb' | 3 | 1/0 | 16 min |
| | | 2/0 | 25 min |
| | | 3/1 | 40 min |
| | | 2/2 | 90 min |
| | | | |
| ENc' | 3 | 1/0 | ½ min |
| | | 3/3 | 7 min |
| | | | |
| ENd' | 3 | 1/0 | 25 min |
| | | 2/0 | 35 min |
| | | 3/3 | 2 hr |
| | | | |
| ENe' | 3 | 0/1 | 5 min |
| | | 2/2 | 3 hr |
| | | | |
| ENf' | 3 | 1/0 | 5 min |
| | | 2/0 | 11 min |
| | | 3/1 | 18 min |
| | | 1/1 | 60 min |
| | | | |
| ENg' | 3 | 1/0 | 9 min |
| | | 1/0 | 22 min |
| | | 3/1 | 40 min |
| | | 2/2 | 60 min |

**Testing against harvester (ants).** Same treated jars that were used for testing against American cockroaches were used 24 hr later for testing against ants (harvester). 5-6 ants were used per jar.

| **RESULTS** | | | | | |
|---|---|---|---|---|---|
| 24 hr residual activity | | | | | |
| **Test blend** | **dead** | **time** | **Test blend** | **dead** | **time** |
| ENu | 1 | 4 min | ENa' | 2 | ½ min |
| | 1 | 5 min | | 1 | 2½ min |
| | 2 | 16 min | | 1 | 3 min |
| | 1 | 90 min | | 2 | 7 min |
| | | | | | |
| ENv | 1 | 2 min | ENb' | 1 | 6 min |
| | 1 | 45 min | | 1 | 11 min |
| | 3 | 120 min | | 3 | 15 min |
| | | | | | |
| ENw | 2 | 120 min | ENc' | 1 | ½ min |
| | No change up to 4 hrs | | | 3 | 3 min |
| | | | | 1 | 4 min |
| | | | | | |
| ENx | 1 | 2 min | ENd' | 1 | 2 min |
| | 1 | 45 min | | 4 | 180 min |
| | No change up to 4 hrs | | | | |
| | | | | | |
| ENy | ND | | ENf | 2 | 8 min |
| | | | | 1 | 11 min |
| | | | | 1 | 13 min |
| | | | | 1 | 16 min |
| | | | | 1 | 20 min |
| | | | | | |
| ENz | 1 | 6 min | ENg' | 1 | ½ min |
| | 3 | 120 min | | 1 | 3 min |
| | | | | 2 | 6 min |
| | | | | 1 | 10 min |
| | | | Ene' | 1 | 20 min |
| | | | | 1 | 40 min |
| | | | | 3 | 180 min |

The above data show that, in most treatments, ants started moving backward within a few seconds to a few minutes after exposure, particularly with ENz. In addition, RM may be mixed with PMO under the following conditions:
1- in the presence of soybean oil and sesame oil
2- in the presence of BA
3- in the presence of soybean oil alone
4- in the presence of soybean oil and L-menthyl iso valerate
5- in the presence of soybean oil and BA

As can be seen from the above discussion, the pesticidal combinations of active compounds according io me present invention are markedly superior to known pesticidal agents/active compounds conventionally used for control of household pests.

## Claims

1. A contact pesticidal composition for the control of household pests including cockroaches and ants, consisting essentially of, in admixture with an acceptable carrier, rosemary oil.

2. A contact pesticidal composition for the control of household pests including cockroaches and ants, consisting essentially of, in admixture with an acceptable carrier, rosemary oil and methyl salicylate.

3. A contact pesticidal composition for the control of household pests consisting essentially of, in admixture with an acceptable carrier, rosemary oil and pyrethrum.

4. A contact pesticidal composition for the control of household pests consisting essentially of, in admixture with an acceptable carrier, rosemary oil, pyrethrum and methyl salicylate.

5. A method for controlling household pests, including cockroaches and ants, comprising applying to the location where control is desired a pesticidally-effective amount of the pesticidal composition of any one of claims 1 to 4.

## Patentansprüche

1. Kontaktpestizidzusammensetzung zur Bekämpfung von Haushaltsschädlingen, einschließlich Schaben und Ameisen, die im wesentlichen aus Rosmarinöl im Gemisch mit einem akzeptablen Träger besteht.

2. Kontaktpestizidzusammensetzung zur Bekämpfung von Haushaltsschädlingen, einschließlich Schaben und Ameisen, die im wesentlichen aus Rosmarinöl und Salizylsäuremethylester im Gemisch mit einem akzeptablen Träger besteht.

3. Kontaktpestizidzusammensetzung zur Bekämpfung von Haushaltsschädlingen, die im wesentlichen aus Rosmarinöl und Pyrethrum im Gemisch mit einem akzeptablen Träger besteht.

4. Kontaktpestizidzusammensetzung zur Bekämpfung von Haushaltsschädlingen, die im wesentlichen aus Rosmarinöl, Pyrethrum und Salizylsäuremethylester im Gemisch mit einem akzeptablen Träger besteht.

5. Verfahren zur Bekämpfung von Haushaltsschädlingen, einschließlich Schaben und Ameisen, bei dem auf die Örtlichkeit, auf der die Bekämpfung erwünscht ist, eine pestizidwirkende Menge der pestiziden Zusammensetzung nach einem der Ansprüche 1 bis 4 ausgebracht wird.

## Revendications

1. Composition pesticide de contact destinée à la lutte contre les parasites ménagers comprenant les blattes et les fourmis, formée essentiellement d'essence de romarin mélangée à un vecteur acceptable.

2. Composition pesticide de contact destinée à la lutte contre les parasites ménagers comprenant les blattes et les fourmis, formée essentiellement d'essence de romarin et de salicylate de méthyle mélangés à un vecteur acceptable.

3. Composition pesticide de contact destinée à la lutte contre les parasites ménagers, formée essentiellement d'essence de romarin et de pyrèthre mélangés à un vecteur acceptable.

4. Composition pesticide de contact destinée à la lutte contre les parasites ménagers, formée essentiellement d'essence de romarin, de pyrèthre et de salicylate de méthyle mélangés à un vecteur acceptable.

5. Procédé de lutte contre les parasites ménagers, comprenant les blattes et les fourmis, comprenant l'application à l'emplacement où la lutte est souhaitée d'une quantité efficace sur le plan pesticide de la composition pesticide selon l'une quelconque des revendications 1 à 4.
